# EUROPÄISCHE PATENTANMELDUNG

(11) **EP 2 671 736 A2**
(43) Veröffentlichungstag der Anmeldung: **11.12.2013**
(21) Anmeldenummer: 13002733.7
(22) Anmeldetag: 27.05.2013
(51) Int. Cl.: B60D 1/52, B60D 1/54

(54) **Entriegelungseinrichtung für eine Anhängekupplung eines Kraftfahrzeugs**

(30) Priorität: 04.06.2012 DE 102012011054
(71) Anmelder: WESTFALIA - Automotive GmbH, 33378 Rheda-Wiedenbrück (DE)
(72) Erfinder: Söffge, Friedhelm, 71229 Leonberg (DE)
(74) Vertreter: Bregenzer, Michael

(57) **Zusammenfassung**

Die Erfindung betrifft eine Entriegelungseinrichtung für eine Anhängekupplung eines Kraftfahrzeugs. Diese Entriegelungseinrichtung ist für eine Anhängekupplung eines Kraftfahrzeugs konzipiert, welche Entriegelungseinrichtung einen in einen Kugelstangenlagerkopf eingebauten Sperrbolzen (7) umfasst, der mit einer Schubstange (10) verbunden und axialbeweglich ausgebildet ist, wobei zwischen der Schubstange (10) und einem Antrieb (11) eine Betätigungseinrichtung (12) wirksam ist. Um die Entriegelungseinrichtung zu optimieren, ist der Antrieb (11) eine Elektromotoreinheit (13), und ein Steuerhebel (14) bildet im Wesentlichen die Betätigungseinrichtung, wobei der Steuerhebel (14) unmittelbar mit der Schubstange (10) des Sperrbolzens (7) und mit der Elektromotoreinheit (13) in Wirkverbindung steht.

## Beschreibung

Die Erfindung bezieht sich auf eine Entriegelungseinrichtung für eine Anhängekupplung eines Kraftfahrzeugs, nach dem Oberbegriff des Patentanspruchs 1.

Die Erfindung betrifft z.B. eine Entriegelungseinrichtung für eine Anhängekupplung eines Kraftfahrzeugs, welche Entriegelungseinrichtung einen in einen Kugelstangenlagerkopf eingebauten Sperrbolzen umfasst, der mit einer Schubstange verbunden und axialbeweglich ausgebildet ist, wobei zwischen der Schubstange und einem Antrieb eine Betätigungseinrichtung wirksam ist.

Es ist eine Anhängekupplung mit einer Kugelstange für Kraftfahrzeuge bekannt, EP 1 614 556 A1, die zwischen einer verriegelten Ruhelage und einer verriegelten Betriebslage verstellbar ist. Die Kugelstange wirkt mit einem Kugelstangenlagerkopf zusammen, der mit einem Sperrbolzen versehen ist. Über den Sperrbolzen ist die Kugelstange festlegbar. Der Sperrbolzen steht zur Antriebsseite hin mit einer Axial-Schubstange in Wirkverbindung, und er ist unter Vermittlung einer mehrere Bauteile umfassenden Betätigungseinrichtung an einen Antrieb angeschlossen.

Aus DE 199 02 355 A1 geht eine Anhängekupplung für ein Kraftfahrzeug hervor, die eine Kupplungseinheit mit einem fahrzeugfest angeordneten Lagerteil und ein am Lagerteil bewegliches Schwenkteil aufweist. Der Kugelhals ist gegenüber dem Lagerteil um eine Achse zwischen einer Ruhestellung und einer Arbeitsstellung verschwenkbar. Mit einer mechanischen Fixiereinrichtung ist der Kugelhals in der Arbeitsstellung festlegbar. Zum Bewegen des Kugelhalses aus der Arbeitsstellung heraus ist die Fixiereinrichtung mittels eines elektrisch betreibbaren Löseantriebs verbunden.

Es ist daher die Aufgabe der vorliegenden Erfindung, eine verbesserte Entriegelungseinrichtung für eine Anhängekupplung sowie eine damit ausgestattete Anhängekupplung bereitzustellen.

Ein zweckmäßiges Ziel ist, einen Kugelstangenlagerkopf mit einer Entriegelungseinrichtung für eine Anhängekupplung eines Kraftfahrzeugs zu konzipieren, welche Entriegelungseinrichtung sich durch räumlich günstige Bauweise, vertretbaren Bauaufwand, einfache Realisierung und gute Funktion auszeichnet.

Nach der Erfindung wird diese Aufgabe durch eine Entriegelungseinrichtung gemäß der technischen Lehre des Anspruchs 1 gelöst.

Vorteilhaft ist z.B. eine Entriegelungseinrichtung für eine Anhängekupplung eines Kraftfahrzeugs vorgesehen, welche Entriegelungseinrichtung einen in einen Kugelstangenlagerkopf eingebauten Sperrbolzen umfasst, der mit einer Schubstange verbunden und axialbeweglich ausgebildet ist, wobei zwischen der Schubstange und einem Antrieb eine Betätigungseinrichtung wirksam ist, wobei der Antrieb eine Elektromotoreinheit ist und ein Steuerhebel im Wesentlichen die Betätigungseinrichtung bildet, wobei der Steuerhebel unmittelbar mit der Schubstange des Sperrbolzens und mit der Elektromotoreinheit in Wirkverbindung steht.

Der Sperrbolzen kann aber auch in einer fahrzeugfest montierten oder fahrzeugseitig festlegbaren oder festgelegten Halterung beweglich gelagert sein, die zum Halten der Kugelstange vorgesehen ist. Die Kugelstange ist beispielsweise zwischen einer Arbeitsstellung, die zum Ziehen eines Anhängers vorgesehen ist, und einer Ruhestellung an der Halterung beweglich gelagert, in der die Kugelstange beispielsweise näher beim Heck des Kraftfahrzeugs angeordnet ist, zum Beispiel in einem Ruhestellungsraum zwischen Stoßfänger und Karosserie im Wesentlichen verborgen ist.

Die Erfindung eignet sich aber auch für steckbare Anhängekupplungen, bei denen die Kugelstange beispielsweise an die fahrzeugseitige Halterung angesteckt oder in diese eingesteckt werden kann.

An dieser Stelle sei erwähnt, dass selbstverständlich die Kugelstange auch andere Kuppelelemente zum Ankuppeln eines Anhängers oder eines Lastenträgers tragen kann als eine Kugel, beispielsweise eine Steckaufnahme haben kann oder dergleichen.

Mit der erfindungsgemäßen Entriegelungseinrichtung ist auch eine aktive Verriegelung möglich, d.h. der Antrieb kann eine Verriegelungseinrichtung zum Verriegeln der Kugelstange auch in eine Verriegelungsstellung betätigen. Zweckmäßig ist es jedoch, wenn die Verriegelungseinrichtung in die Verriegelungsstellung durch eine Federanordnung federbelastet ist, so dass die Entriegelungseinrichtung aktiv in Richtung der Entriegelungsstellung oder Lösestellung wirkt, in welcher die Kugelstange beweglich ist, beispielsweise von der Halterung wegbewegt werden kann oder an der Halterung beweglich wird, beispielsweise zum Schwenken und/oder Schieben zwischen der Arbeitsstellung und der Ruhestellung.

Die erfindungsgemäße Anhängekupplung und/oder die Entriegelungseinrichtung umfasst oder bildet vorzugsweise eine Verriegelungseinrichtung zum Verriegeln der Kugelstange in mindestens einer Stellung, zum Beispiel der erwähnten Arbeitsposition oder einer Ruheposition oder beiden. Die Verriegelungseinrichtung weist zweckmäßigerweise eines oder mehrere durch den Sperrbolzen betätigbare Formschlusselemente auf. Das oder die Formschlusselemente können von dem Sperrbolzen beispielsweise in Formschlussaufnahmen oder eine Formschlussaufnahme in eine Verriegelungsstellung hinein bewegt werden und geben die Kugelstange in der Entriegelungsstellung, in der sie aus der mindestens einen Formschlussaufnahme heraus bewegt sind, für eine Bewegung frei, zum Beispiel zum Verstellen zwischen der Arbeitsstellung und der Ruhestellung oder zum Entfernen von der fahrzeugseitigen Halterung.

Ein bevorzugtes Konzept sieht vor, dass ein freier Endbereich des Sperrbolzens vor ein Lager der Anhängekupplung, zum Beispiel den Kugelstangenlagerkopf, frei vorsteht, so dass die Kupplung mit der Entriegelungseinrichtung möglich ist. Dort kann beispielsweise die Gabel, die am Steuerhebel angeordnet ist, mit dem Sperrbolzen in Eingriff gelangen. Der Sperrbolzen hat beispielsweise ein Betätigungsende, das mit dem Steuerhebel verbindbar ist und vor ein Lager der Anhängekupplung vorsteht. Dieses Konzept ist besonders montagefreundlich. Eine Nachrüstung einer bereits vorhandenen Anhängekupplung mit der erfindungsgemäßen Entriegelungseinrichtung ist ohne weiteres möglich. Auch eine zunächst manuell betätigbare Verriegelungseinrichtung einer Anhängekupplung kann mit der erfindungsgemäßen Entriegelungseinrichtung sozusagen motorisch nachgerüstet werden.

Der Antrieb umfasst beispielsweise einen elektromotorischen Schwenkantrieb. Der Steuerhebel ist beispielsweise ein Schwenkhebel oder umfasst einen Schwenkhebel.

Weitere, die Erfindung ausgestaltende Merkmale sind in den Unteransprüchen enthalten.

Die mit der Erfindung hauptsächlich erzielten Vorteile sind darin zu sehen, dass der Steuerhebel und die Elektromotoreinheit sich kompakt darstellen lassen, wenig Raum beanspruchen, sich leicht entwicklungstechnisch umsetzen lassen und eine gute Funktion sowie hohe Standfestigkeit aufweisen.

Letzteres wird vorteilhaft auch noch dadurch unterstützt, dass der Verbindungsabschnitt zwischen dem Bolzenabschnitt mit kreisförmigem Querschnitt bzw. der gabelförmigen Aufnahme des Steuerhebels ausgezeichnete mechanische Eigenschaften aufweist. Vorteilhaft ist also vorgesehen, dass die Verbindungsvorrichtung durch eine Aufnahmegabel des Steuerhebels und einen Bolzenabschnitt mit insbesondere kreisförmigem Querschnitt der Schubstange gebildet wird, der bereichsweise von der Aufnahmegabel umgeben wird, welche Aufnahmegabel in axialer Richtung des Bolzenabschnitts betrachtet von Anschlagelementen begrenzt wird.

Eine zweckmäßige technische Lösung wird dadurch erzielt, dass der Steuerhebel mit dem Zapfen des Abtriebs unter Vermittlung einer Formschlussverbindung in Wirkverbindung steht. Diese Formschlussverbindung wird beispielsweise durch eine problemlos darstellbare Innenverzahnung des Ringbereichs bzw. eine Außenverzahnung des Zapfens gebildet.

Musterhaft ist, dass der Zapfen Bestandteil des Getriebes ist, das zusammen mit dem Elektromotor die Bauraum günstige Elektromotoreinheit ergibt. Eine derartige Elektromotoreinheit kann ein am Markt zu günstigen Konditionen erhältliches und vorgefertigtes Modul sein. Hervorzuheben ist auch die mit der der Innenverzahnung vereinigte Betätigungsbuchse mit ihrem Anschlagelement, das mit einer ringausschnittförmigen Ausnehmung versehen ist, umfassend erste und zweite Anschläge, mit denen der Mitnehmer des Steuerhebels zusammenwirkt. Diese Ausbildung ergibt eine Art Freilauf, der einen Maßstäbe setzenden Betrieb des Elektromotors mit dem Steuerhebel über die Betätigungsbuchse ermöglicht.

In der Zeichnung wird ein Ausführungsbeispiel der Erfindung gezeigt, das nachstehend näher erläutert wird. Es zeigen:

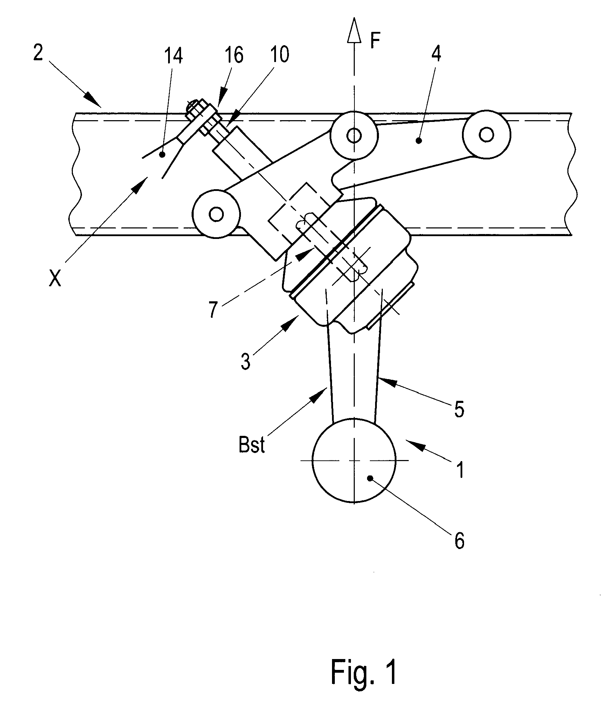

- Figur 1: eine schematische Ansicht von oben auf eine Anhängekupplung für ein Kraftfahrzeug mit einem Querträger, an dem ein Kugelstangenlagerkopf mit einer Kugelstange in Lage gehalten wird,
- Figur 2: eine Einzelheit X der Fig. 1 in größerem Maßstab,
- Figur 3: eine Ansicht in Pfeilrichtung Y der Fig. 2,
- Figur 4: schematische Steuerungsangaben eines Elektromotors bzw. eines Steuerhebels der Entriegelungseinrichtung.

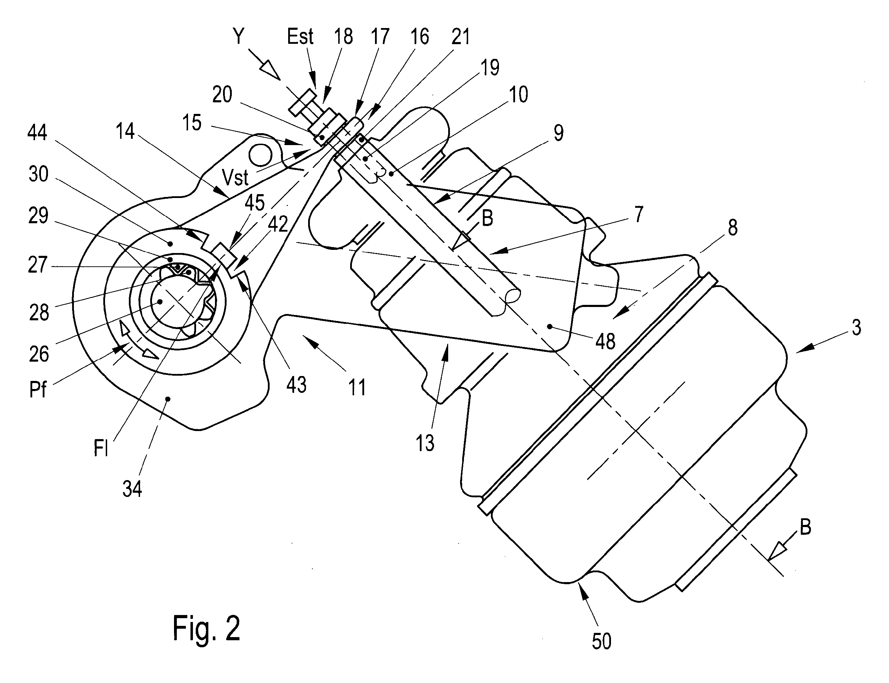

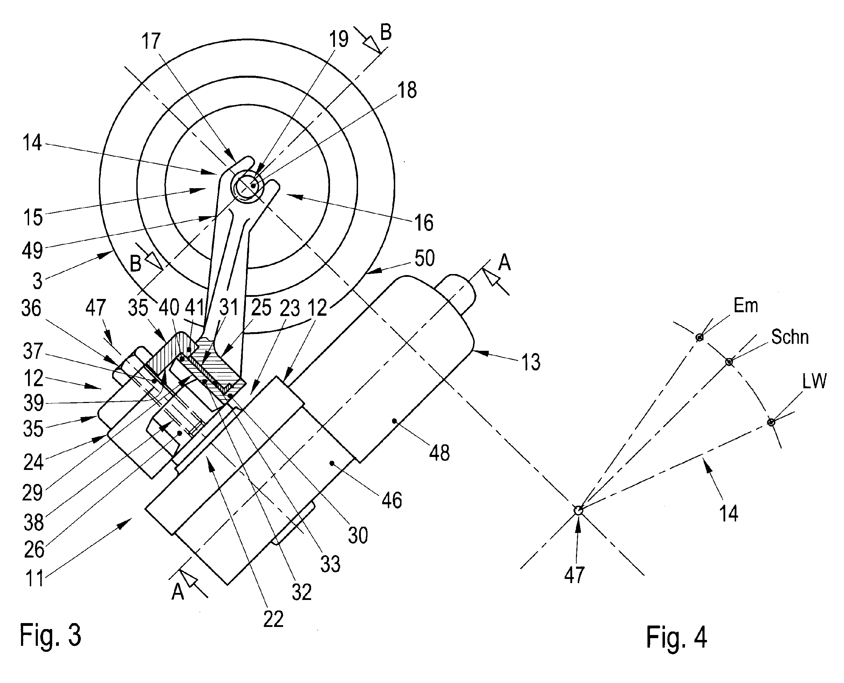

Eine Anhängekupplung 1 für ein nicht näher dargestelltes Kraftfahrzeug, dessen Fahrtrichtung mit F angegeben ist, ist z.B. in einem Heck dieses Kraftfahrzeugs befestigt und weist einen Querträger 2 auf, an dem ein Kugelstangenlagerkopf 3 unter Vermittlung einer Lagerkonsole 4 gehalten wird. Der Kugelstangenlagerkopf 3 trägt eine Kugelstange 5, die an einem freien Ende mit einer Kupplungskugel 6 versehen ist. In den Kugelstangenlagerkopf 3 eingebaut ist ein axial beweglicher Sperrbolzen 7 einer Entriegelungseinrichtung 8. Nach mechanischer Beeinflussung bzw. Ausrücken der Entriegelungseinrichtung 8 ist die Kugelstange 5 von einer Betriebsstellung Bst in eine Ruhestellung -nicht gezeigt- bewegbar. Einzelheiten der Entriegelungseinrichtung 8 bzw. des Sperrbolzens 7 sind in der DE 103 20 302 A1 dargestellt. Der Sperrbolzen 7 ist mit einer koaxialen Verlängerung 9 verbunden, die als Schubstange 10 des Sperrbolzens 7 dient. Zwischen der Schubstange 10 und einem letztere bewegbaren Antrieb 11 ist eine Betätigungseinrichtung 12 -Fig. 3- vorgesehen, wobei die Schubstange 10 zwischen einer Verriegelungsstellung Vst und einer Entriegelungsstellung Est bewegbar ist,-Fig.2-.

Der Antrieb 11 ist als Elektromotoreinheit 13 dargestellt, und ein einziger Steuerhebel 14 bildet im Wesentlichen die Betätigungseinrichtung 12. Dabei steht der Steuerhebel 14 unmittelbar mit der Schubstange 10 des Sperrbolzens 7 und mit der Elektromotoreinheit 13 in Wirkverbindung. Der Steuerhebel 14 ist von einarmiger Gattung und arbeitet an einem der Schubstange 10 zugekehrten Ende 15 unter Zwischenschaltung einer Verbindungseinrichtung 16 mit der Schubstange 10 zusammen. Die Verbindungseinrichtung 16 setzt sich zusammen aus einer Aufnahmegabel 17 und einem einen kreisförmigen Querschnitt 18 aufweisenden Bolzenabschnitt 19 der Schubstange 10. Die Aufnahmegabel 17 umgibt den kreisförmigen Querschnitt 18 zumindest bereichsweise formschlüssig, und sie wird in axialer Richtung des Bolzenabschnitts 19 von radialen mit Abstand zueinander angeordneten Anschlagelementen 20 und 21 begrenzt.

Die Anschlagelemente 20 und/oder 21 umfassen z.B. Flanschvorsprünge oder Kragen.

Der Steuerhebel 14 wirkt auf einem einem Abtrieb 22 -Fig. 3-der Elektromotoreinheit 13 zu gewandten Ende 23 über eine Formschlussverbindung 24 mit besagtem Abtrieb 22 zusammen. Ein Ringbereich 25 des Steuerhebels 14 umgibt einen Zapfen 26. Hierbei umfasst die Formschlussverbindung 24 eine Innenverzahnung 27 des Ringbereichs 25 und eine Außenverzahnung 28 des Zapfens 26. Die Innenverzahnung 27 ist in eine Betätigungsbuchse 29 eingearbeitet, die benachbart der Elektromotoreinheit 13 ein radiales Anschlagelement 30 besitzt und vom Ringbereich 25 umgeben wird bzw. in einer Bohrung 31 des Ringbereichs 25 angeordnet ist. Zwischen einem Schaft 32 der Betätigungsbuchse 29 und der Bohrung 31 des Ringbereichs 25 des Steuerhebels 14 ist eine Lagerbuchse 33 eingesetzt.

Zur axialen Sicherung des Steuerhebels 14 bzw. des Ringbereichs 25 auf dem Zapfen 26 dient ein ringförmiges, plattenartiges Spannteil 35 und eine axiale Schraube 36, die mit einem Gewindezapfen 37 in einem Gewinde 38 des Zapfens 26 ruht. Dabei stützt sich eine Innenseite 39 des Spannteils 35 an einem Ende 40 des Schafts 32 ab und ein Kragen 41 am Umfang des Spannteils 35 hält den Ringbereich 25 in axialer Richtung, dergestalt, dass der Steuerhebel 14 gegenüber der Betätigungsbuchse 29 -Pfeilangabe Pf- relativbeweglich ist. Hierzu ist das radiale Anschlagelement 30 mit einer ringausschnittförmigen Ausnehmung 42 versehen -Fig. 2-, die von einem ersten Anschlag 43 und einem zweiten Anschlag 44 begrenzt wird. Zwischen den Anschlägen 43 und 44 ist ein fest mit dem Steuerhebel 14 verbundener Mitnehmer 45. Die Ausnehmung 42, die Anschläge 43 sowie 44 und der Mitnehmer 45 bilden eine Art Freilauf F1, wodurch die Ausnehmung 42 relativ zum Mitnehmer 45 verfahrbar ist, und zwar dann, wenn die Elektromotoreinheit 13 wirksam wird.

Der Zapfen 26 des Abtriebs 22 gehört zu einem Getriebe 46, und eine Drehachse 47 des Zapfens 26 ist quer zu einer Längsmittelebene A-A eines Elektromotors 48 der Elektromotoreinheit 13 angeordnet. Darüber hinaus ist der Zapfen 26 in das Getriebe 46 integriert, die mit dem Elektromotor 48 die besagte Elektromotoreinheit 13 bildet. Die Längsmittelebene A-A des Elektromotors 48 und eine Längsmittelebene B-B der Schubstange 10 verlaufen im Wesentlichen parallel zueinander.

Gemäß Fig. 3 weist der Steuerhebel 14 aus baulichen Gründen zwischen Verbindungseinrichtung 16 und Formschlussverbindung 24 vom Ringbereich 25 aus einen gekröpften Hebelabschnitt 49 auf, der es ermöglicht den Elektromotor 48 an einem Gehäuseabschnitt 50 des Kugelstangenlagerkopf 3 vorbeizuführen.

Beim Betrieb der Entriegelungseinrichtung 8 überwindet der rotierende Elektromotor 48 einen Leerweg Lw, um systemimmanente Toleranzen auszugleichen bzw. über ein optimiertes Drehmoment des Elektromotors 48 zu verfügen. Ein normaler Schaltpunkt Schn ist dann erreicht, wenn der Anschlag 43 an dem Mitnehmer 45 angreift. Dadurch wird die Schubstange 10 mit Sperrbolzen 7 nach links bewegt -Fig. 2-, und zwar solange bis die maximale Endlage Em erreicht ist und die Entriegelungseinrichtung 8 ausgerückt ist. Die Kugelstange 5 der Anhängekupplung 1 gelangt im ausgerückten Zustand der Entriegelungseinrichtung 8 durch sein Eigengewicht in eine Zwischenstellung und wird von dort bspw. manuell in die Ruhestellung verbracht. In der Ruhestellung ist die Entriegelungseinrichtung 8 wieder eingerückt als verriegelt und kann, falls gewünscht, erneut ausgerückt-entriegelt werden.

## Patentansprüche

1. Entriegelungseinrichtung für eine Anhängekupplung eines Kraftfahrzeugs, wobei die Anhängekupplung einen insbesondere in einen Kugelstangenlagerkopf eingebauten Sperrbolzen zur Verriegelung einer Kugelstange (5) umfasst, wobei der Sperrbolzen (7) mit einer Schubstange verbunden und axialbeweglich ausgebildet ist, wobei die Schubstange anhand einer Betätigungseinrichtung mit einem Antrieb gekoppelt ist, **dadurch gekennzeichnet, dass** der Antrieb (11) eine Elektromotoreinheit (13) ist oder umfasst und ein Steuerhebel (14) im Wesentlichen die Betätigungseinrichtung (12) bildet, wobei der Steuerhebel (14) unmittelbar mit der Schubstange (10) des Sperrbolzens (7) und mit der Elektromotoreinheit (13) in Wirkverbindung steht.

2. Entriegelungseinrichtung nach Anspruch 1, **dadurch gekennzeichnet, dass** der Steuerhebel (14) z.B. einarmig ausgeführt ist und an einem der Schubstange (10) zugekehrten Ende (15) unter Zwischenschaltung einer Verbindungsvorrichtung (16) mit der Schubstange (19) zusammenarbeitet.

3. Entriegelungseinrichtung nach Anspruch 2, **dadurch gekennzeichnet, dass** die Verbindungsvorrichtung (16) durch eine Aufnahmegabel (17) des Steuerhebels (14) und einen Bolzenabschnitt (19) mit insbesondere kreisförmigem Querschnitt (18) der Schubstange (10) gebildet wird, der in die Aufnahmegabel (17) eingreift, wobei die Aufnahmegabel (17) in einer Längserstreckungsrichtung des Bolzenabschnitts (19) an mindestens einem Anschlagelement (20 und 21) anschlägt oder zwischen zwei Anschlagelementen (20 und 21) angeordnet ist.

4. Entriegelungseinrichtung nach einem der vorhergehenden Ansprüche, **dadurch gekennzeichnet, dass** der Steuerhebel (14) auf einem einem Abtrieb (22) der Elektromotoreinheit (13) zugewandten Ende (23) über eine Formschlussverbindung (24) mit besagtem Abtrieb (22) zusammenwirkt.

5. Entriegelungseinrichtung nach Anspruch 4, **dadurch gekennzeichnet, dass** der Steuerhebel (14) mit einem Ringbereich (25) einen Zapfen (26) des Abtriebs (22) umgibt, wobei die Formschlussverbindung (24) eine Innenverzahnung (27) des Ringbereichs (25) und eine Außenverzahnung (28) des Zapfens (26) umfasst.

6. Entriegelungseinrichtung nach Anspruch 5, **dadurch gekennzeichnet, dass** zur axialen Sicherung des Ringbereichs (25) des Steuerhebels (14) auf dem Zapfen (26) eine axiale Schraube (36) dient, die einerseits in ein Gewinde (38) in dem Zapfen (26) hineingedreht ist und andererseits an einem Spannteil (35) anliegt, das sich mit einem kreiszylinderischen Kragen (41) am Ringbereichs (25) des Steuerhebels (14) abstützt.

7. Entriegelungseinrichtung nach Anspruch 5 oder 6, **dadurch gekennzeichnet, dass** der Zapfen (26) des Abtriebs (22) Bestandteil eines Getriebes (46) ist, wobei die Drehachse (47) des Zapfens (26) quer zu einer Längsmittelebene (A-A) eines Elektromotors (48) der Elektromotoreinheit (13) angeordnet ist.

8. Entriegelungseinrichtung nach Anspruch 7, **dadurch gekennzeichnet, dass** der Zapfen (26) mit dem Getriebe (46) gekoppelt ist, das mit dem Elektromotor (48) im Wesentlichen die Elektromotoreinheit (13) bildet.

9. Entriegelungseinrichtung nach Anspruch 8, **dadurch gekennzeichnet, dass** die Längsmittelebene (A-A) des Elektromotors (48) und eine Längsmittelebene (B-B) der Schubstange (10) im Wesentlichen parallel zueinander verlaufen.

10. Entriegelungseinrichtung nach einem oder mehreren der vorangehenden Ansprüchen, **dadurch gekennzeichnet, dass** die Innenverzahnung (27) in eine Betätigungsbuchse (29) eingearbeitet und in eine Bohrung (31) des Ringbereichs (25) eingesetzt ist, wobei die Betätigungsbuchse (29) benachbart der Elektromotoreinheit (13) ein radiales Anschlagelement (30) umfasst.

11. Entriegelungseinrichtung nach Anspruch 10, **dadurch gekennzeichnet, dass** das radiale Anschlagelement (30) mit einer ringausschnittförmigen Ausnehmung (42) versehen ist, die von einem ersten Anschlag (43) und einem zweiten Anschlag (44) begrenzt wird, wobei zwischen den Anschlägen (43 und 44) der Ausnehmung (42) ein fest mit dem Steuerhebel (14) verbundener Mitnehmer (45) vorgesehen ist.

12. Entriegelungseinrichtung nach Anspruch 11, **dadurch gekennzeichnet, dass** die Ausnehmung (42) die Anschläge (43 und 44) und der Mitnehmer (45) eine Art Freilauf (F1) bilden.

13. Entriegelungseinrichtung nach einem der vorhergehenden Ansprüche, **dadurch gekennzeichnet, dass** der Elektromotor (48) zunächst über einen Leerweg (Lw) dreht und dann einen normalen Schaltpunkt (Schn) erreicht, von dem aus der Anschlag (43) der Ausnehmung (42) der Betätigungsbuchse (29) den Mitnehmer (45) und den Steuerhebel (14) sowie die Schubstange (10) in eine maximale Endlage (Em) verbringt.

14. Anhängekupplung mit einer Entriegelungseinrichtung (8) nach einem der vorhergehenden Ansprüche, **dadurch gekennzeichnet, dass** sie eine bezüglich einer fahrzeugseitig festlegbaren oder festgelegten Halterung insbesondere schwenkbar und/oder verschieblich gelagerte oder lösbar mit der Halterung verbindbare, insbesondere steckbare, Kugelstange aufweist, die in zumindest einer Stellung, insbesondere einer zum Ziehen eines Anhängers geeigneten Arbeitsposition, anhand einer Verriegelungseinrichtung verriegelbar ist, wobei die Verriegelungseinrichtung anhand der Entriegelungseinrichtung (8) verriegelbar und/oder entriegelbar ist.

15. Anhängekupplung nach Anspruch 14, **dadurch gekennzeichnet, dass** ein freier Endbereich des Sperrbolzens (7) vor eine Lagereinheit, insbesondere einen Kugelstangenlagerkopf (3) der Anhängekupplung zur Koppelung mit der Entriegelungseinrichtung (8) vorsteht.
